# FASCICULE DE BREVET EUROPEEN

(11) **EP 3 086 902 B1**
(45) Date de publication et mention de la délivrance du brevet: **14.02.2018**
(21) Numéro de dépôt: 14833514.4
(22) Date de dépôt: 22.12.2014
(51) Int. Cl.: B24B 27/00, B25J 11/00, B24B 9/20, B29C 37/02

(54) **OUTIL ROTATIF D'ENLÈVEMENT DE MATIÈRE D'UNE PIÈCE EN MATIÈRE PLASTIQUE**
DREHWERKZEUG ZUM ENTFERNEN VON MATERIAL AUS EINEN KUNSTSTOFF TEIL
ROTARY TOOL FOR REMOVING MATERIAL OF A PLASTIC PART

(30) Priorité: 24.12.2013 FR 1363566
(43) Date de publication de la demande: 02.11.2016
(73) Titulaire: Compagnie Plastic Omnium, 69007 Lyon (FR)
(72) Inventeur: TRESSE, David, F-01390 Saint-Andre de Corcy (FR)
(74) Mandataire: Remy, Vincent Noel Paul
(86) Numéro de dépôt international: PCT/FR2014/053498
(87) Numéro de publication internationale: WO 2015/097392

(56) Documents cités:
- EP-A1- 1 050 394
- WO-A1-02/064323
- CA-A1- 2 251 858
- US-A- 4 221 514
- US-A- 4 798 024
- US-A- 4 993 896
- US-A1- 2003 207 653
- US-A1- 2010 257 986

## Description

La présente invention concerne le domaine de la fabrication de pièce en matière en plastique par moulage.

On connaît différents procédés de moulage de pièce en matière plastique :
- procédé par thermoformage (compression avec une matière thermoplastique) ;
- procédé par injection (pour les matières thermoplastiques) ; et
- procédé par compression (pour les matières thermodurcissables telle que le SMC) ;

De nombreux procédés, tels que le procédé de transformation du SMC par compression, peuvent générer des bavures sur les bords de la pièce, dues au fluage de matière plastique.

Ces bavures doivent nécessairement être enlevées en phase de finition de la pièce en matière plastique. Cette opération est appelée « ébavurage ».

Actuellement l'ébavurage est réalisé manuellement par des opérateurs qui poncent la bavure.

Ce procédé, manuel et long, provoque de nombreux problèmes de santé, tels que des troubles musculo squelettiques, dus à l'utilisation prolongé de ponceuses vibrantes. De plus la poussière très fine générée par le ponçage encrasse les poumons et les machines, nécessitant une installation complexe avec notamment des systèmes d'aspiration et de calfeutrage.

Aucune solution automatique satisfaisante n'existe actuellement pour automatiser cette opération.

Une des difficultés majeures est que l'enlèvement de la bavure est une opération délicate nécessitant du toucher, car la bavure étant fine en épaisseur (de 0.1 à 0.3mm) et non constante, on dégrade rapidement l'arête si on n'adapte pas l'opération à la bavure.

Or cette nécessité de « toucher » n'est pas compatible avec un procédé automatique, qui par définition gère difficilement le cas par cas.

On connaît toutefois du document WO 02/064323 A1, un système automatique d'enlèvement de matière d'une pièce en matière plastique, conforme au préambule de la revendication 1.

L'invention a pour but de fournir un équipement permettant de réaliser un enlèvement de matière d'une pièce en matière plastique, tel qu'un ébavurage ou un fraisage, de façon automatique. Ce système d'enlèvement de matière comprend un axe rotatif muni d'un moyen abrasif. L'axe rotatif comporte une partie non abrasive, pouvant former butée radiale du système sur un bord de guidage. Ce plus, le système comporte un moyen moteur de mise en rotation du moyen abrasif relié à l'axe rotatif, ainsi qu'un moyen de liaison mécanique à un robot, la liaison mécanique étant de type rotule à doigt.

De plus, lors du moulage et l'usinage d'une pièce en matière plastique, il peut arriver que la ligne de bord de la pièce se déforme localement dans le sens de l'épaisseur, notamment en flexion dans le cas de l'usinage. Ceci peut se produire notamment lorsque la pièce est fine.

De ce fait, la trajectoire que doit suivre la meule diffère de la trajectoire programmée à l'avance de façon théorique.

Cette différence de trajectoire réelle et théorique peut également se produire lorsque la pièce n'est pas posée de façon parfaitement précise, par rapport au référentiel géométrique du posage (support) de la pièce et du robot.

De façon surprenante, l'équipement selon l'invention permet de s'affranchir de ce problème. En effet, grâce à la liaison mécanique de type rotule à doigt, la butée mécanique non abrasive et la meule peuvent suivre une ligne réelle avec une adaptabilité par rapport à la ligne théorique programmée.

Selon un mode de réalisation, le bord de guidage est un bord de la pièce en matière plastique.

Le moyen abrasif peut comporter une partie de forme conique, dont la pente de l'axe de rotation par rapport à la génératrice du cône est adaptée à enlever la matière d'un bord de la pièce en cassant un angle formé entre la matière à enlever et le bord de la pièce.

Selon cette configuration, la pente du moyen abrasif est de préférence adaptée à guider le bord de la pièce afin de le caler contre la partie non abrasive grâce à la flexibilité de la pièce.

Le moyen abrasif comporte de préférence une concrétion diamantée.

Selon un autre mode réalisation, le système comporte un guide de découpe comportant une empreinte d'une forme à réaliser sur la pièce en matière plastique et formant le bord de guidage, et sur lequel peut s'appuyer la partie non abrasive.

Selon une variante de ce mode réalisation, le système comporte une pointe foret sur l'axe rotatif.

L'invention concerne également un système robotisé d'enlèvement de matière d'une pièce en matière plastique comprenant :
- un système d'enlèvement de matière d'une pièce en matière plastique selon l'invention ;
- un robot pour piloter la trajectoire du système d'enlèvement de matière, la pièce en matière plastique restant fixe.

L'invention concerne également un système robotisé d'enlèvement de matière en bord d'une pièce en matière plastique comprenant :
- un système d'enlèvement de matière d'une pièce en matière plastique selon l'invention ;
- un robot pour piloter la trajectoire de la pièce en matière plastique face au système d'enlèvement de matière fixe.

Enfin, l'invention concerne l'utilisation du système selon l'invention pour l'ébavurage d'une pièce en matière plastique, et pour le fraisage ou le perçage d'une pièce en matière plastique.

L'invention sera mieux comprise à la lecture de la description qui va suivre, en se référant aux dessins annexés et fournis à titre d'exemples et ne présentant aucun caractère limitatif, dans lesquels :
- La figure 1 illustre un mode de réalisation de l'outil selon l'invention.
- La figure 2 illustre le fonctionnement de la liaison mécanique de type rotule à doigt.
- La figure 3 illustre différentes variantes de réalisations, avec des meules de formes différentes.
- La figure 4 illustre un mode de réalisation dans lequel le système d'enlèvement de matière selon l'invention comporte en plus un guide de découpe sur lequel vient s'appuyer la partie non abrasive formant butée radiale.
- La figure 5 illustre un mode de réalisation dans lequel l'axe rotatif du système d'enlèvement de matière selon l'invention comporte, en plus du guide de découpe, une pointe foret pour transpercer la matière.

L'invention concerne un système d'enlèvement de matière d'une pièce (PP) en matière plastique.

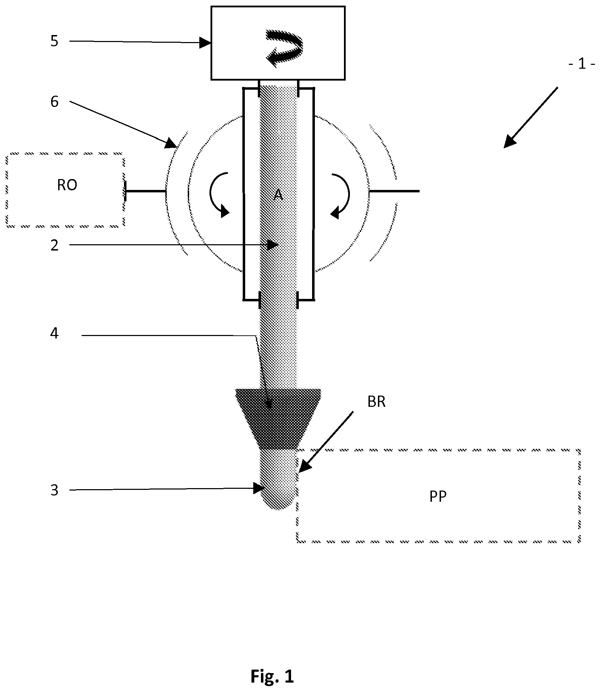

On se réfère maintenant à la figure 1 qui représente un mode de réalisation du système (1) selon l'invention. Ce système comporte :
- un axe rotatif (2) muni d'un moyen abrasif (4) et d'une partie non abrasive (3), cette partie non abrasive (3) étant prévue pour former butée radiale (BR) du système (1) sur un bord de guidage ;
- un moyen moteur (5) de mise en rotation de du moyen abrasif (4) relié à l'axe rotatif (2) ;
- un moyen de liaison mécanique (6) à un robot, la liaison mécanique étant de type rotule à doigt.

L'invention est décrite dans un premier temps dans le cas particulier d'un enlèvement de matière sur les bords d'une pièce (notée PP sur les figures) en matière plastique, et plus particulièrement dans le cadre d'un ébavurage. Mais l'enlèvement de matière peut également correspondre à un fraisage ou à un perçage par exemple.

La pièce en matière plastique peut être en matière thermoplastique ou en matière thermodurcissable, de préférence chargée au moins de fibres de renfort (matière composite). De préférence la pièce est une pièce composite thermodurcissable de type SMC.

On appelle bord de pièce, un bord externe formant tout ou partie de la périphérie de la pièce, ou un bord interne issu d'un évidement de matière.

Le moyen moteur (5) peut être un moteur pneumatique par exemple. Il permet de transmettre un couple au moyen abrasif (4). Le moyen abrasif (4) peut être une meule dans le cadre de l'ébavurage d'un bord de pièce.

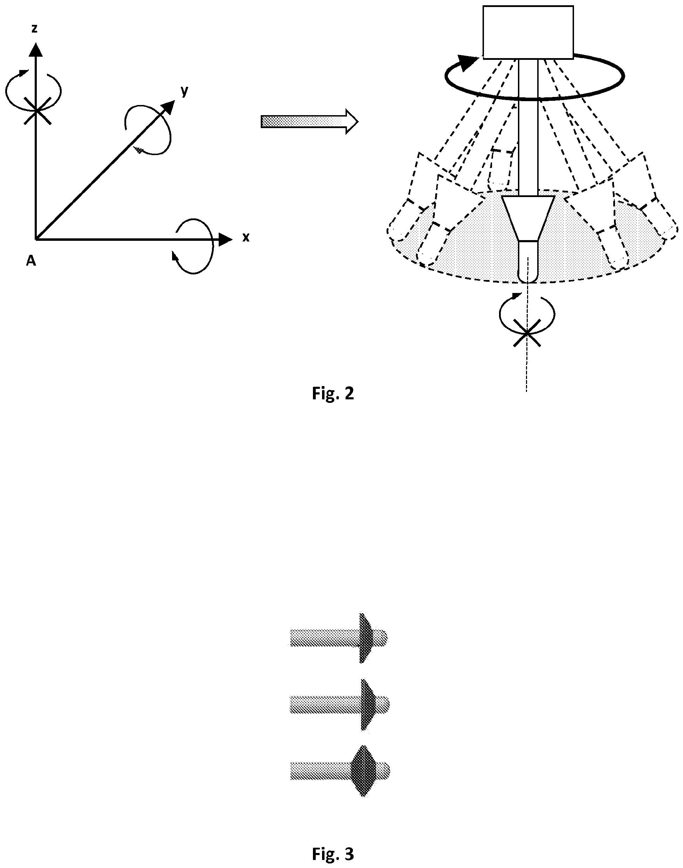

Le système (1) comporte un moyen de liaison mécanique (6) à un robot (RO). La figure 2 illustre le fonctionnement de cette liaison mécanique (6). Cette liaison mécanique est de type « rotule à doigt » de centre A et de rotation selon l'axe **z** bloquée, l'axe **z** étant celui de l'axe rotatif (2). Cette liaison mécanique (6) est également qualifiée de « tête compliante à 360 degrés », par opposition à une tête compliante axiale.

Il s'agit d'une rotule dotée d'un doigt faisant obstacle à une rotation. Ainsi, dans un plan (**x, y, z**), la liaison sphérique à doigt dispose de quatre degrés de liaisons. Elle lie les trois translations et une rotation, laissant libres les deux autres rotations.

Ainsi, la rotation de l'outil (1) selon l'axe **z -** celui de l'axe rotatif (2) - est bloquée par la liaison mécanique (6), entre le robot et l'outil (1). Mais à l'intérieur de l'outil (1), l'axe rotatif (2) est mis en rotation selon l'axe **z** par le moyen moteur (5).

Une telle liaison mécanique permet d'autoriser l'utilisation d'une consigne constante d'effort tangentiel de l'outil (1) sur le bord de la pièce mécanique (PP), et de garantir un contact permanent sous cet effort tangentiel, et ce quelle que soit la géométrie du bord, et donc la trajectoire de l'outil (1).

Outre l'amélioration de la qualité dans l'enlèvement de matière, cette liaison mécanique (6) facilite la programmation de la trajectoire de l'outil (1), commandée par un robot, car elle permet un débattement de l'ordre du centimètre.

Habituellement, pour programmer une trajectoire légèrement courbe, ou pour prendre en compte un défaut de positionnement de la pièce sur le support d'usinage, un défaut de pliage ou de forme, il est nécessaire de définir la trajectoire par un ensemble de points proches par lesquels le robot doit faire passer l'outil. Grâce à la liaison de type rotule à doigt, deux points peuvent suffire en début et fin de courbe, car l'outil absorbe/compense des variations de trajectoire dans un intervalle de tolérance.

L'axe rotatif (2) comporte une partie non abrasive (3) garantissant la distance de pénétration tangentielle de l'ébavurage. Cette partie non abrasive (3) forme une butée mécanique de l'outil (1) sur un bord de guidage. Selon l'exemple de l'ébavurage d'un bord de pièce, le bord de guidage est le bord de la pièce à ébavurer. Cette butée mécanique est appelée « bout pilote ». Cette partie non abrasive (3) peut être positionnée au niveau de l'extrémité de l'axe rotatif (2) opposée au moyen moteur (5).

Elle permet d'appuyer l'outil (1) contre le bord de la pièce en plastique (PP), sans l'endommager, tout en suivant le bord de la pièce. Cette butée mécanique (3) permet de s'affranchir de la variabilité géométrique des bavures. La capacité d'abrasion de la meule abrasive (4) étant très supérieure à l'épaisseur de la bavure, cette butée radiale (3) évite que la meule abrasive (4) rentre dans la matière de manière non contrôlée. En effet, sans cette butée (4), il serait nécessaire de régler le niveau d'effort de l'outil sur la pièce de façon très précise, pour éviter que la meule abrasive (4) rentre dans la matière de manière trop importante. L'arrêt franc de la butée mécanique (3) autorise, en combinaison avec la liaison mécanique (6), l'application d'un effort tangentiel global sur le bord de la pièce.

Il est ainsi plus aisé de calibrer la pression de contact, c'est-à-dire l'effort tangentiel de la partie non abrasive (3) sur le bord de la pièce, pour que la meule (4) ne pénètre pas trop dans la matière. Grâce à l'effet de compliance (liaison mécanique de type rotule à doigt) l'axe rotatif (2) pivote, permettant de compenser des variations de pression.

Pour l'ébavurage d'une pièce automobile, un effort tangentiel de 80N a permis d'enlever toutes les bavures sans abimer la pièce elle-même.

L'axe (2) porte au-dessus ou en dessous de la butée (3) une meule abrasive (4). La meule (4) comporte de préférence une concrétion diamantée.

Selon un mode de réalisation, la meule (4) comporte une partie de forme conique, dont la pente de l'axe de rotation par rapport à la génératrice du cône permet :
- d'enlever la matière (la bavure) du bord pièce en cassant l'angle formé entre la bavure et le bord pièce ;
- de guider le bord pièce afin de le caler contre la butée mécanique (3) grâce à la flexibilité dans l'épaisseur (selon l'axe **z**) de la pièce.

La meule (4) peut également avoir toute forme de révolution convexe ou concave. La figure 3 illustre différentes variantes de réalisations, avec des meules (4) de formes différentes, et notamment une forme de deux cônes assemblés par leur base.

Le système (1) selon l'invention peut être utilisé pour tout type de procédé d'enlèvement de matière, tel que l'ébavurage, le fraisage, ou le perçage.

Actuellement, pour réaliser des découpes dans des pièces en matière plastiques, notamment en matière thermodurcissable, on réalise soit un usinage au robot six axes, soit un poinçonnage.

Avec la première technique, les découpes (trous ronds, oblongs, formes spécifiques) sont réalisés par déplacement d'une fraise de découpe avec un robot six axes. La tolérance en position de ce type d'installation est généralement d'environ +/-1 mm et la tolérance de forme d'environ +/-0,5mm. Ce manque de précision est en grande partie lié aux défauts et à la flexibilité du robot et une chaine de côte longue de la fraise au trou usiné : fraise-> broche d'usinage -> robot -> table tournante-> support pièce -> pièce -> trou usiné.

Avec la seconde technique, les découpes sont en générale précises en position et forme (de l'ordre de +/- 0,45 et +/-0,2) par contre l'outillage et spécifique (mono produit) et toutes les découpes doivent être réalisées dans la même direction (direction de poinçonnage).

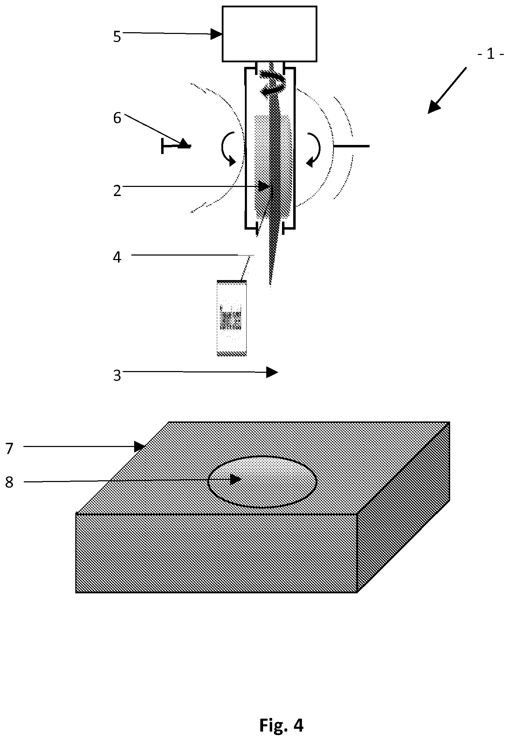

**Selon un second mode de réalisation** (figure 4), particulièrement bien adapté au fraisage, et permettant de s'affranchir de ces contraintes, le système d'enlèvement de matière selon l'invention comporte en plus un guide de découpe (7) sur lequel vient s'appuyer la partie non abrasive (3) formant butée.

Le guide de découpe (7) est une pièce comportant une empreinte (8) de la forme à réaliser. La partie non abrasive (3) vient alors à l'intérieur de l'empreinte (8) pour en suivre les contours, transmettant ainsi la trajectoire au moyen abrasif (4). Ainsi, le bord de guidage n'est plus le bord de la pièce (PP), mais le bord de l'empreinte (8). Le moyen abrasif (4) est une fraise par exemple.

Un avantage de ce mode de réalisation, est de permettre une tolérance plus large de la position d'amenée de l'outil (1) porté par le robot, car la trajectoire d'enlèvement de matière est ensuite guidée localement par le guide de découpe (7).

De plus, le guidage local et précis permet d'obtenir une forme non perturbée par la tolérance de forme (due à l'imprécision globale de la position du robot).

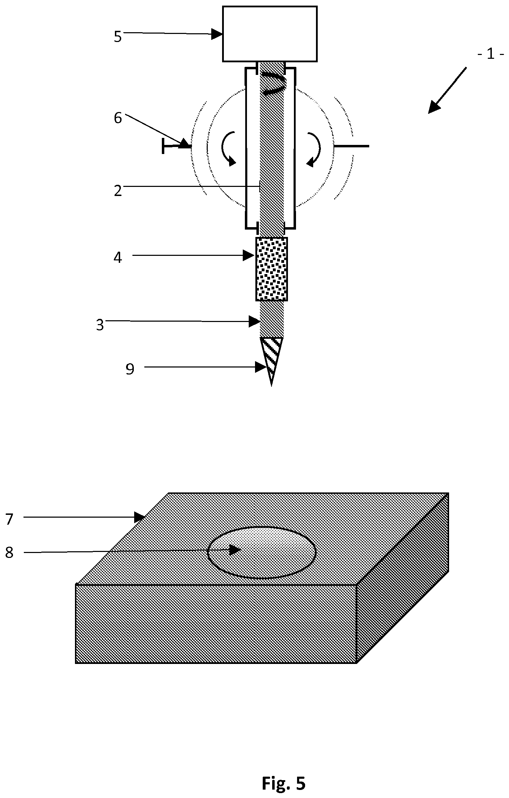

**Selon un troisième mode de réalisation** (figure 5), variante du second mode et particulièrement bien adapté au perçage, l'axe rotatif (2) du système d'enlèvement de matière (1) selon l'invention comporte, en plus du guide de découpe (7), une pointe foret (9) pour transpercer la matière.

Lors de l'utilisation de ce système, le guide de découpe (7) est positionné sur le support d'usinage au droit de la forme à découper. La pointe foret (9) permet au moyen abrasif (4) de transpercer la matière. Le moyen abrasif (4) descend jusqu'à ce que la partie non abrasive (3) soit en contact avec l'empreinte (8) du guide de découpe (7). Le moyen abrasif (4) est déplacé jusqu'à ce que la partie non abrasive (3) soit en appui sur le bord de l'empreinte (8) du guide de découpe (7). La liaison mécanique (6) de type rotule à doigt permet à la partie non abrasive (3) formant butée radiale de rester en permanence au contact du guide de découpe (7), tout en suivant l'empreinte (8). Le robot (RO) se déplace tout au long du contour de la découpe et la partie non abrasive (3) est maintenue plaquée contre le guide (7) tout le long du déplacement. A la fin de la découpe, le robot (RO) se dégage de la pièce (PP).

L'invention concerne également **un système robotisé d'enlèvement de matière, par exemple** sur les bords, d'une pièce (PP) en matière plastique, comprenant un système d'enlèvement de matière (1) selon l'invention, monté sur un robot (RO), de préférence un robot anthropomorphe, pour piloter la trajectoire du dispositif.

Le robot (RO) est utilisé comme moyen de manipulation de l'outil (1) garantissant un bon niveau de répétabilité en termes d'orientation de l'outil (de l'ordre du degré), de positionnement (inférieur au mm) et de vitesse.

Grâce au système selon l'invention, le robot (RO) n'est pas obligé de tourner sur lui-même avec ses câbles : c'est la liaison mécanique (6) de type rotule à doigt qui permet de suivre toute trajectoire tout en restant en contact avec le bord de la pièce (PP).

Selon une variante, le robot (RO) pilote la trajectoire du système (1) d'enlèvement de matière selon l'invention, ce système étant donc mobile, la pièce (PP) en matière plastique restant fixe.

Selon une autre variante, le robot (RO) porte la pièce (PP) en matière plastique et pilote la trajectoire de la pièce (PP) face au système (1) d'enlèvement de matière selon l'invention, ce système (1) restant fixe.

## Revendications

1. Système (1) d'enlèvement de matière d'une pièce en matière plastique, comprenant :
- un axe rotatif (2) muni d'un moyen abrasif (4), l'axe rotatif (2) comportant une partie non abrasive (3), pouvant former butée radiale du système (1) sur un bord de guidage ;
- un moyen moteur (5) de mise en rotation du moyen abrasif (4) relié à l'axe rotatif (2) ; et
- un moyen de liaison mécanique (6) à un robot, **caractérisé en ce que** la liaison mécanique (6) est de type rotule à doigt.

2. Système selon la revendication 1, dans lequel le bord de guidage est un bord de la pièce en matière plastique.

3. Système selon l'une des revendications précédentes, dans lequel le moyen abrasif (4) comporte une partie de forme conique, dont la pente de l'axe de rotation par rapport à la génératrice du cône est adaptée à enlever la matière d'un bord de la pièce en cassant un angle formé entre la matière à enlever et le bord de la pièce.

4. Système selon la revendication 3, dans lequel la pente du moyen abrasif (4) est adaptée à guider le bord de la pièce afin de le caler contre la partie non abrasive (3) grâce à la flexibilité de la pièce.

5. Système selon l'une des revendications précédentes, dans lequel le moyen abrasif (4) comporte une concrétion diamantée.

6. Système selon l'une des revendications précédentes, comprenant un guide de découpe (7) comportant une empreinte (8) d'une forme à réaliser sur la pièce en matière plastique et formant le bord de guidage, et sur lequel peut s'appuyer la partie non abrasive (3).

7. Système selon la revendication 6, comprenant une pointe foret (9) sur l'axe rotatif (2).

8. Système robotisé d'enlèvement de matière d'une pièce (PP) en matière plastique comprenant :
- un système (1) d'enlèvement de matière d'une pièce (PP) en matière plastique selon l'une des revendications 1 à 6 ;
- un robot (RO) pour piloter la trajectoire dudit système (1) d'enlèvement de matière, la pièce (PP) en matière plastique restant fixe.

9. Système robotisé d'enlèvement de matière en bord d'une pièce (PP) en matière plastique comprenant :
- un système (1) d'enlèvement de matière d'une pièce (PP) en matière plastique selon l'une des revendications 1 à 6 ;
- un robot (RO) pour piloter la trajectoire de la pièce (PP) en matière plastique face au système (1) d'enlèvement de matière fixe.

10. Utilisation du système selon l'une des revendications 1 à 7, pour l'ébavurage d'une pièce (PP) en matière plastique.

11. Utilisation du système selon l'une des revendications 1 à 7, pour le fraisage ou le perçage d'une pièce (PP) en matière plastique.

## Patentansprüche

1. System (1) zum Abtragen von Material von einem Teil aus Kunststoff, umfassend:
- eine Drehachse (2), die mit einem Abrasivmittel (4) versehen ist, wobei die Drehachse (2) einen nicht abrasiven Teil (3) aufweist, der einen radialen Anschlag des Systems (1) auf einem Führungsrand bilden kann,
- ein Antriebsmittel (5), um das Abrasivmittel (4) in Drehung zu versetzen und das mit der Drehachse (2) verbunden ist; und
- ein Mittel für die mechanische Verbindung (6) mit einem Roboter, **dadurch gekennzeichnet, dass** die mechanische Verbindung (6) des Typs Fingerkugelgelenk ist.

2. System nach Anspruch 1, wobei der Führungsrand ein Rand des Teils aus Kunststoff ist.

3. System nach einem der vorhergehenden Ansprüche, wobei das Abrasivmittel (4) einen kegelförmigen Teil aufweist, bei dem die Neigung der Drehachse relativ zu der Mantellinie des Kegels so eingerichtet ist, dass sie das Material von einem Rand des Teils abträgt, indem sie einen zwischen dem abzutragenden Material und dem Rand des Teils gebildeten Winkel bricht.

4. System nach Anspruch 3, wobei die Neigung des Abrasivmittels (4) so eingerichtet ist, dass sie den Rand des Teils führt, um ihn dank der Flexibilität des Teils gegen den nicht abrasiven Teil (3) festzustellen.

5. System nach einem der vorhergehenden Ansprüche, wobei das Abrasivmittel (4) eine Diamantenkonkretion aufweist.

6. System nach einem der vorhergehenden Ansprüche, umfassend eine Schneidführung (7), die eine Formhöhlung (8) einer an dem Teil aus Kunststoff zu realisierenden und den Führungsrand bildenden Form aufweist und auf der sich der nicht abrasive Teil (3) abstützen kann.

7. System nach Anspruch 6, umfassend eine Bohrspitze (9) auf der Drehachse.

8. Robotergesteuertes System zum Abtragen von Material von einem Teil (PP) aus Kunststoff, umfassend:
- ein System (1) zum Abtragen von Material von einem Teil (PP) aus Kunststoff nach einem der Ansprüche 1 bis 6;
- einen Roboter (RO) zum Steuern der Bahn des Systems (1) zum Abtragen von Material, wobei das Teil (PP) aus Kunststoff feststehend bleibt.

9. Robotergesteuertes System zum Abtragen von Material am Rand eines Teils (PP) aus Kunststoff, umfassend:
- ein System (1) zum Abtragen von Material von einem Teil (PP) aus Kunststoff nach einem der Ansprüche 1 bis 6;
- einen Roboter (RO) zum Steuern der Bahn des Teils (PP) aus Kunststoff dem feststehenden System (1) zum Abtragen von Material gegenüber.

10. Verwendung des Systems nach einem der Ansprüche 1 bis 7 zum Entgraten eines Teils (PP) aus Kunststoff.

11. Verwendung des Systems nach einem der Ansprüche 1 bis 7 zum Fräsen oder Bohren eines Teils (PP) aus Kunststoff.

## Claims

1. System (1) for removing material from a plastic part, comprising :
- a rotating spindle (2) provided with abrasive means (4), the rotating spindle (2) includes a non-abrasive section (3), which can form a radial stop for the system (1) on a guide edge;
- driving means (5) for rotating the abrasive means (4) connected to the rotating spindle (2); and
- mechanical means (6) for linking to a robot, the mechanical linkage (6) being of type ball joint with pin.

2. System according to claim 1, wherein the guide edge is an edge of the plastic part.

3. System according to one of the preceding claims, wherein the abrasive means (4) include a conical section, whose gradient of the rotating spindle with respect to the cone generatrix is adapted to remove the material from an edge of the part by breaking a corner formed between the material to be removed and the edge of the part.

4. System according to claim 3, wherein the gradient of the abrasive means (4) is adapted to guide the edge of the part in order to block it against the non-abrasive section (3) due to the part flexibility.

5. System according to one of the preceding claims, wherein the abrasive means (4) are diamond-impregnated.

6. System according to one of the preceding claims, comprising a cutting guide (7) having a cavity (8) of a shape to be produced on the plastic part and forming the guide edge, and on which the non-abrasive section (3) can rest.

7. System according to claim 6, comprising a drill tip (9) on the rotating spindle (2).

8. Robot-controlled system for removing material from a plastic part (PP) comprising:
- a system (1) for removing material from a plastic part (PP) according to one of claims 1 to 6;
- a robot (RO) for controlling the trajectory of said system (1) for removing material, the plastic part (PP) remaining fixed.

9. Robot-controlled system for removing material on the edge of a plastic part (PP) comprising:
- a system (1) for removing material from a plastic part (PP) according to one of claims 1 to 6;
- a robot (RO) for controlling the trajectory of the plastic part (PP) opposite the fixed system (1) for removing material.

10. Use of the system according to one of claims 1 to 7, for deburring a plastic part (PP).

11. Use of the system according to one of claims 1 to 7, for milling or drilling a plastic part (PP).
